# DEMANDE DE BREVET EUROPEEN

(11) **EP 0 538 120 A1**
(43) Date de publication de la demande: **21.04.1993**
(21) Numéro de dépôt: 92402802.0
(22) Date de dépôt: 14.10.1992
(51) Int. Cl.: F16B 13/00, F16B 13/06

(54) **Cheville pour fixation d'une pièce à une paroi support de faible épaisseur**

(30) Priorité: 16.10.1991 FR 9112753
(71) Demandeur: SOCIETE DE PROSPECTION ET D'INVENTIONS TECHNIQUES SPIT, F-26501 Bourg-Les-Valence Cédex (FR)
(72) Inventeur: Vernet, Franck, F-26300 Bourg de Peage (FR); Barthomeuf, Jean-Paul, F-26300 Bourg de Peage (FR)
(74) Mandataire: Bloch, Gérard

(57) **Abrégé**

La cheville comprend un corps d'expansion (2) et, autour du corps, une douille tubulaire expansible (3) en matériau déformable, avec une collerette d'appui (12) et une extrémité (10) formant écrou. La cheville s'étendant à travers un orifice percé dans la paroi avec la collerette de douille (12) en appui contre la face avant de la paroi, l'écrou (10) coopère avec une partie d'extrémité du corps, est entraîné vers la collerette (12) et provoque l'expansion de la douille (3) et son écrasement contre la face arrière de la paroi. Le corps (2) est tubulaire, pour recevoir une vis de fixation de la pièce, et possède, à l'opposé de la partie d'extrémité , une collerette (7) pour venir en appui contre celle de la douille (12). La douille (3) est plastiquement déformable et des moyens (42) sont prévus pour empêcher la rotation du corps (2) par rapport à la douille (3) dans le sens opposé au sens d'expansion. L'extrémité du corps (2) est pourvue d'un embout de perçage (4).

La cheville de l'invention s'applique bien aux briques.

## Description

La présente invention concerne une cheville, pour fixation d'une pièce à une paroi support, comprenant un corps d'expansion, qui est tubulaire pour recevoir une vis de fixation de la pièce, et, autour du corps, une douille tubulaire expansible en matière plastiquement déformable, dont une extrémité est pourvue d'une collerette d'appui et dont l'autre extrémité est agencée pour, sous l'action d'un entraînement du corps en rotation dans un sens par rapport à la douille, la cheville s'étendant à travers un orifice percé dans la paroi avec la collerette de douille en appui contre la face avant de la paroi, coopérer avec une partie d'extrémité du corps, être entraînée vers la collerette et provoquer l'expansion de la douille et son écrasement contre la face arrière de la paroi et ainsi la fixation de la cheville à la paroi, le corps d'expansion possédant, à l'opposé de la partie d'extrémité de coopération avec la douille, une collerette destinée à venir en appui contre celle de la douille.

La fixation d'une pièce à un matériau support d'épaisseur relativement faible, comme par exemple une cloison mince ou la paroi externe d'une brique, s'effectue de façon particulière, non pas par ancrage dans l'épaisseur du matériau, mais par l'arrière du matériau, c'est-à-dire du côté opposé à celui qui supporte la pièce.

Une cheville, du type mentionné ci-dessus, est pratiquement enseignée par le document WO-A-9005855.

Mais, la fixation d'une pièce avec une telle cheville ne peut s'effectuer que dans des conditions contraignantes, avec plusieurs outils.

La présente invention vise donc à perfectionner une cheville du type mentionné ci-dessus, pour en simplifier et accélérer la fixation et permettre aussi la fixation dans un matériau plein, même si son application première demeure la fixation de pièces à des matériaux creux.

La présente invention concerne donc une cheville du type mentionné ci-dessus, caractérisée par le fait que l'extrémité du corps, destinée à coopérer avec la douille pour provoquer son expansion et son écrasement, est pourvue d'un embout de perçage.

La fixation d'une pièce avec la cheville de l'invention, qui est une cheville autoforeuse, est plus facile qu'avec une cheville de l'art antérieur.

Avec un seul outil, une visseuse, si le perçage s'effectue par rotation du corps de cheville et que la coopération entre le corps et la douille s'effectue par filetage - taraudage, et en une seule étape, un trou est percé par l'extrémité de perçage du corps entouré de la douille et, immédiatement après, la douille subit une expansion et un écrasement contre la paroi support. Une fois la cheville fixée à la paroi, on place la pièce à fixer contre la collerette du corps et, à l'aide du même outil, on visse une vis de fixation à travers la pièce et dans le corps de la cheville.

Certes, le document US-A-4617692 enseigne aussi une cheville, ou plus exactement une douille, pourvue d'un embout de perçage. Mais cet embout est monté vissé sur une tige filetée qui ne sert qu'à l'expansion de la douille et qui ne participe pas à sa fixation puisqu'elle est retirée après.

En outre, et après expansion, l'embout est détaché. Il n'y avait donc pas de raison d'appliquer l'enseignement de ce document pour disposer un embout de perçage à l'extrémité du corps de la cheville du document WO-A-9005855.

Dans une forme de réalisation avantageuse de la cheville de l'invention, un embout de perçage est monté, de préférence de façon détachable, à l'extrémité de perçage du corps de la cheville.

Un embout monté détachable à l'extrémité de perçage du corps de cheville peut donc en être chassé, ce qui autorise la fixation de la pièce à l'aide d'une vis quand-même plus longue que le corps et la pièce à fixer réunis.

Avantageusement encore, l'embout de perçage est un morceau découpé, de préférence en biseau, dans un flanc de tôle. Il peut être nervuré.

Il est aussi préférable que la dimension hors-tout transversale de l'embout soit légèrement plus grande que celle du corps, pour éviter que la douille, avant son utilisation, lors du stockage et de la manutention, ne se désolidarise du corps de cheville, ou même plus grande que celle de l'extrémité de la douille coopérant avec le corps, pour éviter que, en cours de fixation, la douille ne s'immobilise dans le trou percé par l'embout et subisse son expansion prématurément.

Avantageusement, l'embout de perçage est constitué d'une plaquette de coupe agencée pour être reçue dans un porte-plaquette agencé pour être monté à l'extrémité de perçage du corps de cheville.

Dans cette forme de réalisation, la cheville a, de façon originale, été transformée en porte-outil, avec, comme outil, la plaquette de coupe.

L'intérêt de cette forme de réalisation est de pouvoir adapter la plaquette de coupe à la nature du matériau de la paroi support. Par exemple, pour un matériau dur, on adoptera une plaquette en carbure de tungstène alors que pour un matériau relativement mou, une plaquette moulée en alliage métallique léger ou même en matière plastique conviendra.

Dans ces conditions, la demanderesse entend également revendiquer la cheville, sans plaquette de coupe, d'une part, ainsi que le support de plaquette, en tant que tel, d'autre part.

Ainsi l'invention concerne aussi une cheville du type mentionné ci-dessus, caractérisée par le fait que l'extrémité du corps, destinée à coopérer avec la douille pour provoquer son expansion et son écrasement, est pourvue d'un porte-plaquette de coupe.

L'invention concerne encore un porte-plaquette agencé pour être monté à une extrémité d'un corps d'expansion d'une cheville, destiné à coopérer avec une douille tubulaire disposée autour du corps de la cheville, pour fixation d'une pièce à une paroi support, la douille étant en matière plastiquement déformable, une de ses extrémités étant pourvue d'une collerette d'appui et son autre extrémité étant agencée pour, sous l'action d'un entraînement du corps en rotation dans un sens par rapport à la douille, la cheville s'étendant à travers un orifice percé dans la paroi avec la collerette de douille en appui contre la face avant de la paroi, coopérer avec une partie d'extrémité du corps, être entraînée vers la collerette et provoquer l'expansion de la douille et son écrasement contre la face arrière de la paroi et ainsi la fixation de la cheville à la paroi, le corps d'expansion possédant, à l'opposé de la partie d'extrémité de coopération avec la douille, une collerette destinée à venir en appui contre celle de la douille.

Il est aussi préférable et plus simple que le corps de cheville soit fileté et que l'extrémité de la douille opposée à sa collerette soit taraudée pour former écrou sur le corps, le filetage et le taraudage étant avantageusement du type à pas dit d'artillerie.

Dans ce cas, le corps de cheville peut comporter un alésage interne de section cruciforme, s'étendant d'une extrémité à l'autre, permettant, à l'extrémité pourvue de la collerette, son entraînement en rotation par une visseuse et, à l'extrémité de perçage, le montage de l'embout par introduction d'une queue d'embout dans deux branches opposées de l'alésage en croix.

Une telle forme d'alésage offre en outre à la vis de fixation quatre points d'ancrage.

De préférence toujours, lesdits moyens pour empêcher la rotation du corps comprennent, sur le corps, des nervures épaulées d'un côté et, dans la douille, des rainures de réception des nervures.

L'invention sera mieux comprise à l'aide de la description suivante de deux formes de réalisation de la cheville de l'invention, en référence au dessins annexés, sur lesquels :
- la figure 1 est une vue en perspective de la première forme de réalisation de la cheville en cours d'assemblage, avant stockage ou utilisation ;
- la figure 2 est une vue en perspective de la cheville de la figure 1, une fois assemblée ;
- la figure 3 est une vue en coupe axiale de la cheville de la figure 1, juste avant expansion ;
- la figure 4 est une vue en perspective de la cheville de la figure 1, après fixation ;
- la figure 5 est une vue en perspective de la douille expansible de la cheville de la figure 1;
- la figure 6 est une vue latérale du corps de la cheville de la figure 1, seul, avec nervures anti-rotation et filetage à pas d'artillerie ;
- la figure 7 est une vue en coupe transversale du corps de cheville, selon la ligne VII-VII de la figure 6 ;
- la figure 8 est une vue en perspective du support de plaquette, avec sa plaquette, de la deuxième forme de réalisation de la cheville de l'invention ;
- la figure 9 est une vue en perspective de la deuxième forme de réalisation de la cheville de l'invention, avec son support de plaquette et sa plaquette et

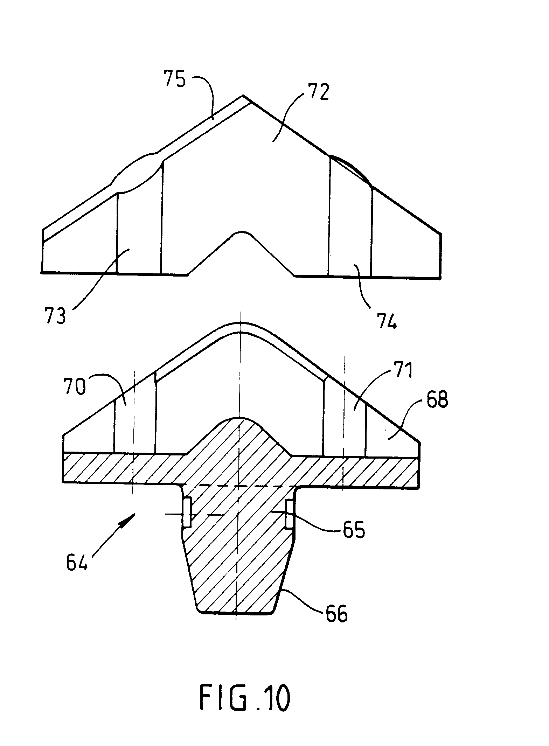

- la figure 10 est une vue éclatée, partiellement en coupe, du support de plaquette et de la plaquette de la cheville de la figure 9.

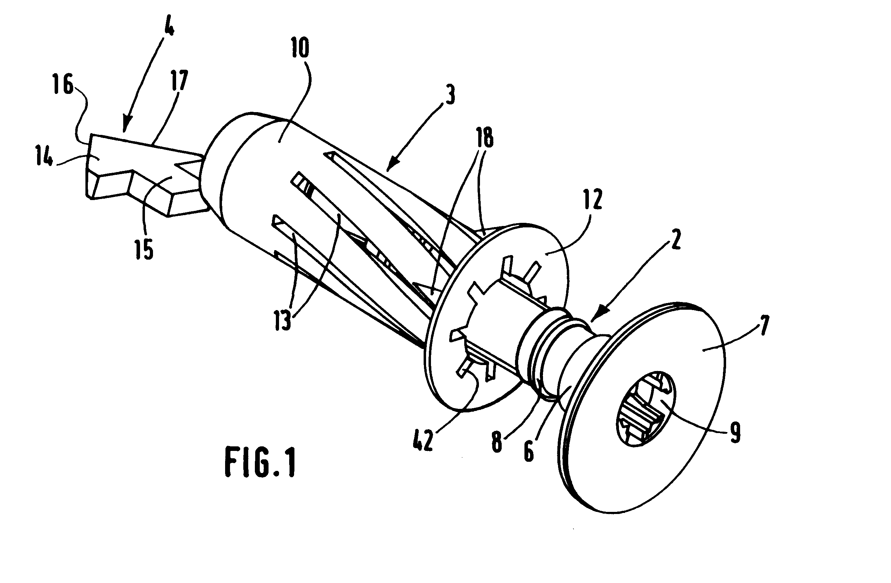

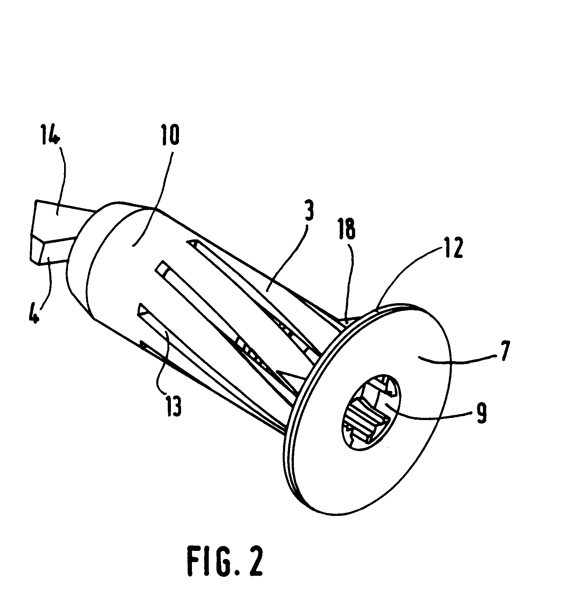

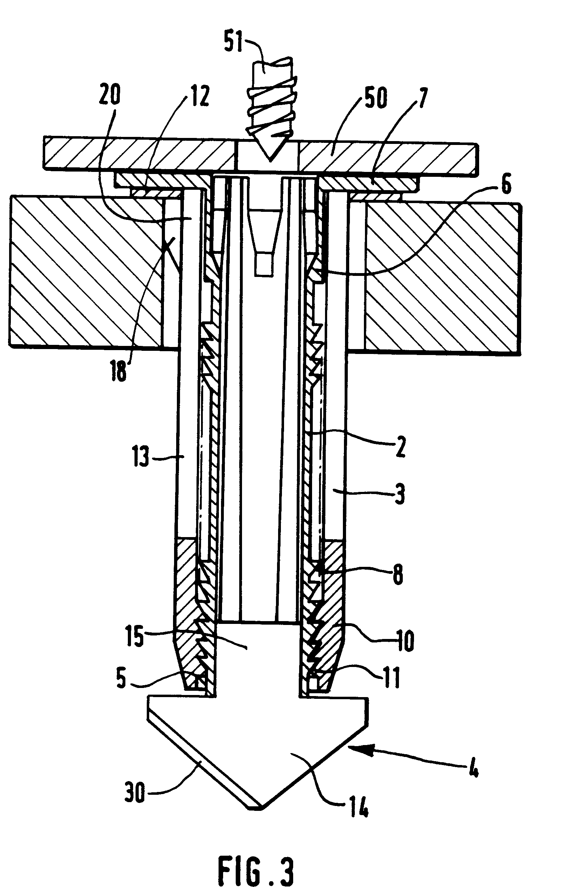

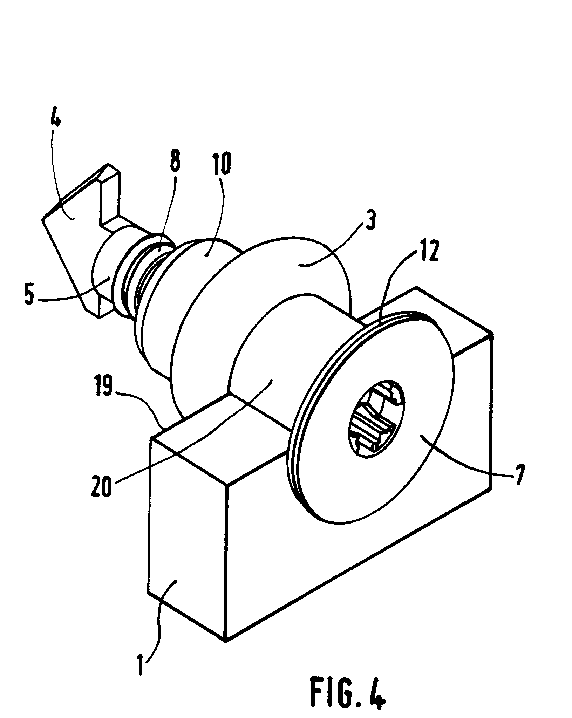

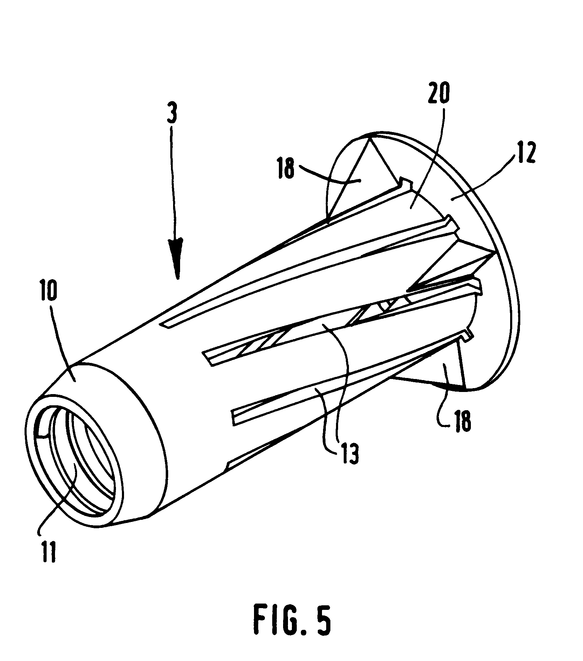

La cheville qui va maintenant être décrite en référence aux figures 1-7, est surtout destinée à fixer une pièce 50 sur une paroi support, de faible épaisseur, comme celle d'une brique creuse 1 (figures 3 et 4).

La cheville comporte trois éléments :
un corps d'entraînement 2, une douille expansible 3 et un embout de perçage 4.

Il s'agit ici d'une cheville auto-foreuse ; elle pourrait toutefois aussi être utilisée sans son embout de perçage.

Le corps de cheville 2 est tubulaire. Il comporte, sur une grande partie de sa longueur, depuis pratiquement l'extrémité 5 destinée à recevoir l'embout de perçage 4, un filetage extérieur 8. L'autre extrémité 6 du corps est pourvue d'une collerette d'appui 7. Le corps comporte un alésage interne 9 de section cruciforme, s'étendant de la collerette d'appui 7 à l'extrémité de perçage 5. Près de la collerette d'appui 7, l'alésage interne 9 peut être par exemple du type "Phillips" ou "Posidrive".

La douille expansible 3 est aussi tubulaire pour être disposée autour du corps 2. Elle est ici en matière plastique. L'une 10 de ses extrémités est intérieurement taraudée 11 , pour coopérer avec le filetage 8 du corps de cheville et former écrou sur le corps, l'autre extrémité 20 de la douille étant pourvue d'une collerette d'appui 12, contre laquelle la collerette 7 du corps de cheville est destinée à venir en appui.

La paroi latérale de la douille 3 est pourvue de fentes 13 d'assouplissement. Il s'agit d'une pluralité de fentes régulièrement espacées ici dans des plans inclinés sur l'axe de la douille tubulaire sur la figure 1 et passant par l'axe sur la figure 3.

La douille 3 est pourvue, sur sa paroi extérieure, ici contre la collerette 12, d'ailettes anti-rotation 18.

L'embout de perçage 4 est un morceau découpé dans un flan de tôle, en forme de pointe triangulaire de perçage 14 prolongée par une queue 15 destinée à être introduite dans deux branches opposées de l'alésage en croix 9 de la portion d'extrémité 5 du corps 2, dite ainsi extrémité de perçage. Les bords convergents 16, 17 de la pointe 14 sont taillés en biseau 30 et s'écartent l'un de l'autre d'une distance, correspondant à sa dimension transversale hors-tout, légèrement plus grande que le diamètre extérieur de la portion d'extrémité 10 de la douille 3.

L'assemblage de la cheville s'effectue en emmanchant par vissage la douille 3, par son extrémité à collerette 12, sur le corps de cheville 2, jusqu'à ce que la collerette 12 vienne contre la collerette 7 du corps puis en introduisant légèrement à force, par la queue 15, l'embout 4 dans l'alésage de la portion d'extrémité de perçage 5 du corps, l'embout étant ainsi monté de façon détachable à cette extrémité de perçage 5.

La fixation d'une pièce à l'aide de la cheville s'effectue comme suit.

A l'aide d'une visseuse, on entraîne, par l'alésage en croix 9 de la portion d'extrémité 6, le corps 2 en rotation et, avec lui, l'embout 4 à bords coupants 16, 17, qui perce ainsi un trou dans la paroi du matériau, ici une brique de réception de la pièce à fixer. Quand les deux collerettes 7, 12 sont en appui contre la paroi de la brique et que la portion 20 de la douille 3, adjacente à sa collerette 12, repose dans le trou ainsi percé, mais sans ne plus pouvoir tourner grâce aux ailettes 18, la rotation, toujours sous l'action de la visseuse, du corps 2 immobilisé en translation axiale, dans la portion d'extrémité taraudée 10 de la douille 3, provoque un déplacement relatif axial du corps 2 et de cette portion de douille 10 qui, formant écrou sur le corps fileté 2, est entraînée vers les collerettes 12, 7 pour provoquer l'expansion, ou le gonflement, de la partie adjacente de la douille, comprise entre cette portion taraudée 10 et la face arrière 19 de la paroi de la brique et, ainsi, son écrasement contre cette face arrière et la fixation de la douille à la paroi de brique 1. Sur la figure 4, la douille 3 a été représentée de façon schématique, sans ses fentes d'assouplissement qui ont été déformées. Il suffit ensuite de placer la pièce à fixer contre la collerette 7 du corps 2 et, à l'aide de la même visseuse, de visser une vis de fixation 51 à travers la pièce à fixer et l'alésage 9 du corps de cheville 2 que la vis vient tarauder dans de bonnes conditions puisque, dans un plan transversal, elle est en appui contre quatre points.

On remarquera que si la vis de fixation est plus longue que le corps de cheville 2 et la pièce réunis, elle chassera sans difficulté l'embout 4 qui ne sert plus à rien.

On remarquera aussi que, grâce aux dimensions transversales relatives de la douille 3 et de l'embout 4, et donc du trou percé, l'expansion de la douille 3 ne peut commencer que quand elle est immobilisée en rotation, sa collerette 12 en appui contre la paroi support.

Selon la nature du matériau de la douille, les fentes d'assouplissement peuvent ne pas être nécessaires.

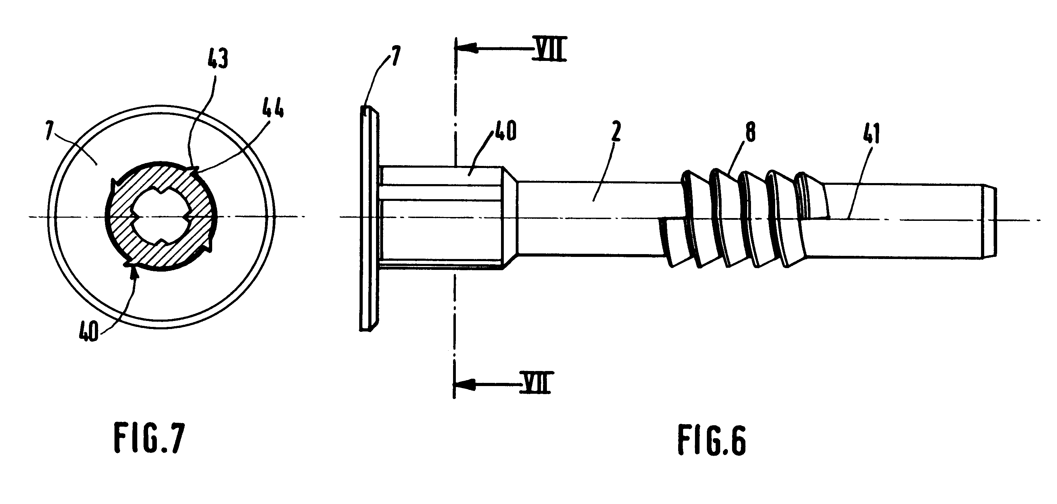

En référence aux figures 6 et 7, le corps 2 de la cheville comporte un filetage 8 à pas d'artillerie destiné à coopérer avec un taraudage à pas d'artillerie correspondant sur la douille. L'avantage d'une telle conformation est de limiter la composante radiale de la force de vissage et donc la dilatation radiale de la portion d'écrou de la douille qui pourrait être préjudiciable à la fixation.

Le corps 2 de la cheville, toujours en référence aux figures 6 et 7, comporte encore, adjacentes à sa collerette d'appui 7, des nervures anti-rotation 40 s'étendant parallèlement à l'axe 41 du corps. Ces nervures 40 sont prévues pour s'engager dans des rainures 42 ménagées, depuis sa collerette, dans la douille (figure 1) et empêcher tout dévissage du corps 2 dans la douille lors d'un éventuel dévissage de la vis de fixation de pièce dans le corps. Les nervures 40 comportent, d'un côté, une rampe 43, n'empéchant pas le vissage du corps dans la douille, sans pour autant provoquer l'expansion de la douille, et, de l'autre côté, un épaulement 44 pour venir en butée contre une paroi correspondante de rainure 42 dans la douille et empêcher tout dévissage du corps.

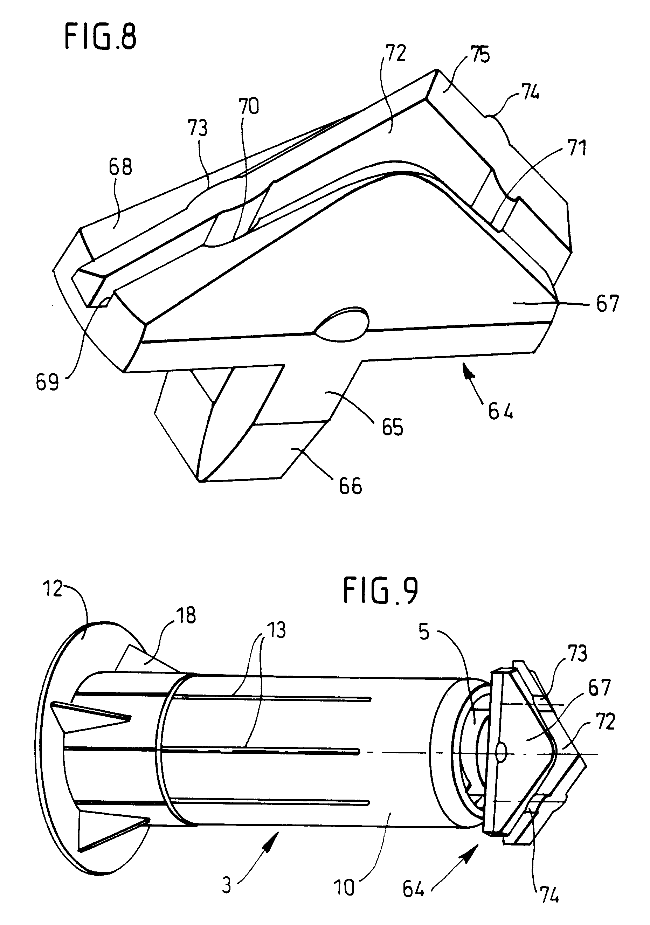

La cheville de la figure 9, ses accessoires de perçage mis à part, est identique à celle des figures précédentes. Son corps d'entraînement et sa douille expansible sont identiques. Seuls diffèrent les moyens de perçage, un embout, dans le premier cas, un support de plaquette et une plaquette de coupe, dans le deuxième cas. Dans ces conditions, les mêmes éléments sont donc référencés par les mêmes nombres.

Le corps de cheville 2, dont l'extrémité de perçage 5 apparait sur la figure 9, reçoit un support de plaquette 64. Le support 64 comporte une queue d'emmanchement 65, de forme générale parallélépipédique, et légèrement chanfreinée (66) pour faciliter l'emmanchement dans la partie d'extrémité de l'alésage intérieur du corps de cheville 2.

La portion d'extrémité de l'alésage intérieur du corps 2 pourra éventuellement être conformée de façon sensiblement correspondante.

La queue 65 est prolongée par deux lèvres 67, 68 parallèles et ménageant entre elles une gorge 69 de réception de plaquette.

Les lèvres 67, 68 sont en forme de pointe triangulaire.

Intérieurement, elles comportent, chacune, une paire de rainures 70, 71 de réception de nervures de plaquette afin d'assurer le centrage et le maintien de la plaquette.

La plaquette de coupe 72 a une forme complémentaire de celle des lèvres 67, 68 du support de plaquette 64. En forme de pointe triangulaire, avec un bord de coupe double 75, elle comporte, de chaque côté, une paire de nervures 73, 74 pour coopérer avec les rainures correspondantes 70, 71 des lèvres 67, 68 du support 64.

L'assemblage de la cheville de la figure 9, pour ce qui concerne le corps et la douille s'effectue de la même manière que précédemment. Pour ce qui concerne le support de plaquette 64 et la plaquette 72, on introduit légèrement à force, mais de façon détachable, la queue 65 dans l'alésage de la portion d'extrémité de perçage du corps puis, la plaquette 72 également légèrement à force dans le support 64, mais aussi de façon détachable.

Quant à la fixation d'une pièce, elle s'effectue avec la cheville de la figure 9 comme avec celle des figures 1 à 7.

L'intérêt de cette dernière cheville est de pouvoir y monter une plaquette de coupe appropriée au matériau à percer.

Pour un matériau dur, comme de la brique ou de la faïence, on choisira une plaquette en carbure de tungstène. Pour un matériau moins dur, on pourra prendre une plaquette moulée en alliage métallique léger ou, même, en matière plastique.

La cheville de la figure 9 sera offerte à la vente, toute assemblée, mais on n'exclura pas de pouvoir la livrer, soit nue, sans support de plaquette ni plaquette, soit, de préférence, seulement pourvue de son support de plaquette, donc en tant que porte-outil, l'utilisateur n'ayant plus qu'à y adapter la plaquette appropriée.

## Revendications

1. Cheville, pour fixation d'une pièce (50) à une paroi support (1), comprenant un corps d'expansion (2), qui est tubulaire pour recevoir une vis (51) de fixation de la pièce, et, autour du corps, une douille tubulaire expansible (3) en matière plastiquement déformable, dont une extrémité (20) est pourvue d'une collerette d'appui (12) et dont l'autre extrémité (10) est agencée pour, sous l'action d'un entraînement du corps (2) en rotation dans un sens par rapport à la douille (3), la cheville s'étendant à travers un orifice percé dans la paroi (1) avec la collerette de douille (12) en appui contre la face avant de la paroi (1), coopérer avec une partie d'extrémité (5) du corps, être entraînée vers la collerette (12) et provoquer l'expansion de la douille (3) et son écrasement contre la face arrière de la paroi (1) et ainsi la fixation de la cheville à la paroi, le corps d'expansion (2) possédant, à l'opposé de la partie d'extrémité (5) de coopération avec la douille, une collerette (7) destinée à venir en appui contre celle de la douille (12), caractérisée par le fait que l'extrémité (5) du corps (2), destinée à coopérer avec la douille (3) pour provoquer son expansion et son écrasement, est pourvue d'un embout de perçage (4, 72).

2. Cheville selon la revendication 1, dans laquelle l'embout de perçage (4, 72) est monté de façon détachable à l'extrémité de perçage (5) du corps de cheville (2).

3. Cheville selon l'une des revendications 1 et 2, dans laquelle la dimension hors-tout transversale de l'embout de perçage (4, 72) est légèrement plus grande que celle de l'extrémité (10) de la douille (3) coopérant avec le corps de cheville (2).

4. Cheville selon l'une des revendications 1 à 3, dans laquelle l'embout de perçage est constitué d'un morceau de flan de tôle découpé en biseau (30).

5. Cheville selon l'une des revendications 1 à 3, dans laquelle l'embout de perçage est constitué d'une plaquette de coupe (72) agencée pour être reçue dans un porte-plaquette (64) agencé pour être monté à l'extrémité de perçage (5) du corps de cheville.

6. Cheville selon l'une des revendications 1 à 5, dans laquelle des moyens (40, 42) sont prévus pour empêcher la rotation du corps (2) par rapport à la douille (3) dans le sens opposé au sens d'expansion.

7. Cheville selon la revendication 6, dans laquelle lesdits moyens pour empêcher la rotation du corps (2) comprennent, sur le corps (2), des nervures (40) épaulées (44) d'un côté et, dans la douille (3), des rainures (42) de réception des nervures (40).

8. Cheville selon l'une des revendications 1 à 7, dans laquelle l'extrémité (20) de la douille (3) pourvue d'une collerette d'appui (12) est également pourvue de moyens extérieurs anti-rotation (18).

9. Cheville selon l'une des revendications 1 à 8, dans laquelle le corps de cheville (2) est fileté extérieurement et l'extrémité (10) de la douille (3) coopérant avec le corps (2) est taraudée intérieurement, le filetage du corps et le taraudage de la douille possédant un pas d'artillerie.

10. Cheville selon l'une des revendications 1 à 9, dans laquelle le corps de cheville (2) comporte un alésage interne de section cruciforme permettant, à l'extrémité (6) pourvue de la collerette (7), son entraînement en rotation par une visseuse.

11. Cheville selon la revendication 10, dans laquelle l'alésage interne (9) du corps de cheville (2) a une section cruciforme d'une extrémité à l'autre pour permettre, à l'extrémité de perçage (5), le montage d'un embout de perçage (4) par introduction d'une queue d'embout (15) dans deux branches opposées de l'alésage en croix.

12. Cheville, pour fixation d'une pièce (50) à une paroi support (1), comprenant un corps d'expansion (2), qui est tubulaire pour recevoir une vis (51) de fixation de la pièce, et, autour du corps, une douille tubulaire expansible (3) en matière plastiquement déformable, dont une extrémité (20) est pourvue d'une collerette d'appui (12) et dont l'autre extrémité (10) est agencée pour, sous l'action d'un entraînement du corps (2) en rotation dans un sens par rapport à la douille (3), la cheville s'étendant à travers un orifice percé dans la paroi (1) avec la collerette de douille (12) en appui contre la face avant de la paroi (1), coopérer avec une partie d'extrémité (5) du corps, être entraînée vers la collerette (12) et provoquer l'expansion de la douille (3) et son écrasement contre la face arrière de la paroi (1) et ainsi la fixation de la cheville à la paroi, le corps d'expansion (2) possédant, à l'opposé de la partie d'extrémité (5) de coopération avec la douille, une collerette (7) destinée à venir en appui contre celle de la douille (12), caractérisée par le fait que l'extrémité du corps (5), destinée à coopérer avec la douille pour provoquer son expansion et son écrasement, est pourvue d'un porte-plaquette de coupe (64).

13. Porte-plaquette (64) agencé pour être monté à une extrémité (5) d'un corps d'expansion (2) d'une cheville, destiné à coopérer avec une douille tubulaire (3) disposée autour du corps de la cheville, pour fixation d'une pièce (50) à une paroi support (1), la douille (3) étant en matière plastiquement déformable, une de ses extrémité étant pourvue d'une collerette d'appui (12) et son autre extrémité étant agencée pour, sous l'action d'un entraînement du corps (2) en rotation dans un sens par rapport à la douille (3), la cheville s'étendant à travers un orifice percé dans la paroi (1) avec la collerette de douille (12) en appui contre la face avant de la paroi (1), coopérer avec une partie d'extrémité (5) du corps, être entraînée vers la collerette (12) et provoquer l'expansion de la douille (3) et son écrasement contre la face arrière de la paroi (1) et ainsi la fixation de la cheville à la paroi, le corps d'expansion (2) possédant, à l'opposé de la partie d'extrémité (5) de coopération avec la douille, une collerette (7) destinée à venir en appui contre celle de la douille (12).
